# NEUE EUROPÄISCHE PATENTSCHRIFT

(11) **EP 0 392 284 B2**
(45) Veröffentlichungstag und Bekanntmachung des Hinweises auf die Entscheidung über den Einspruch: **20.05.1998**
(45) Hinweis auf die Patenterteilung: 10.08.1994
(21) Anmeldenummer: 90106110.1
(22) Anmeldetag: 30.03.1990
(51) Int. Cl.: F16F 9/46

(54) **Stossdämpfer mit veränderbarer Dämpfungscharakteristik**
Damper with variable damping characteristics
Amortisseur à caractéristiques d'amortissement variable

(30) Priorität: 11.04.1989 DE 3911819
(43) Veröffentlichungstag der Anmeldung: 17.10.1990
(73) Patentinhaber: Hauni Maschinenbau Aktiengesellschaft, 21033 Hamburg (DE)
(72) Erfinder: Neumann, Helmut, D-2056 Glinde (DE)

(56) Entgegenhaltungen:
- DE-A- 3 434 877
- DE-A- 3 518 327
- DE-A- 3 605 182
- DE-A- 3 631 714
- FR-A- 2 311 227
- FR-A- 2 593 121
- GB-A- 2 126 687
- GB-A- 2 164 723
- PATENT ABSTRACTS OF JAPAN vol. 13, no. 560 (M-906)(3908) 13 Dezember 1989,& JP-A-1234634 (KAYABA IND) 19 September 1989,
- PATENT ABSTRACTS OF JAPAN vol. 14, no. 6 (M-916)(3949) 09 Januar 1990,& JP-A-1255734 (KAYABA IND) 12 Oktober 1989,

## Beschreibung

Die Erfindung betrifft einen Stoßdämpfer mit veränderbarer Dämpfungscharakteristik, insbesondere für Kraftfahrzeuge, mit mindestens einem mit einem Dämpfungsmedium gefüllten Zylinder und einer Kolbenstange, die abgedichtet in den Zylinder eintaucht und die an ihrem zylinderseitigen Ende einen gegen die Zylinderwand abgedichteten Kolben trägt, der den Zylinderraum in zwei Kammern aufteilt, die durch den Hauptstrom des Dämpfungsmediums miteinander verbunden sind, sowie mit einem aus wenigstens zwei zwischen den Kammern vorgesehenen, durch separat steuerbare Ventilkörper freigebbaren oder verschließbaren Bypass-Verbindungen bestehenden Bypass-System.
Ein derartiger Stoßdämpfer ist durch die DE-OS 36 05 182 bekanntgeworden. Die der Erfindung zugrundeliegende Aufgabe besteht darin, die Dämpfungscharakteristik eines derartigen Stoßdämpfers weiter zu verfeinern bzw. praxisgerechter zu gestalten.

Gemäß der Erfindung wird dies dadurch erreicht, daß jede der Bypass-Verbindungen zwecks differenzierterer Variationensmöglichkeiten der Dämpfungscharakteristik mit einem in Abhängigkeit vom Strömungsdruck in der Zug- und Druckstufe des Stoßdämpfers wechselseitig eine Verbindung zwischen den Kammern herstellenden Ventil versehen ist, wobei die Ventile zu den jeweils zugeordneten steuerbaren Bypass-Verbindungen in Reihe geschaltet und in Verbindung mit der Kolbenstange sowie koaxial zu deren Achse in Reihe hintereinander angeordnet sind.

In Fortführung der Erfindung weist das druckabhängig reagierende Ventil einen für die Zugund Druckstufe gemeinsamen, wechselseitig federbelasteten, druckbeaufschlagbaren Ventilkörper auf, welcher das Ventil sensibel reagieren und schnell ansprechen läßt.

Eine kompakte Bauweise des Ventils ist gemäß einer Ausgestaltung dadurch gewährleistet, daß der Ventilkörper zwischen den Endanschlägen zweier Federkörper auf einem Trägerbolzen des Ventils verschieblich gelagert ist.
Eine gedrungene Bauweise des Bypass-Systems bei zwei Bypass-Verbindungen läßt sich nach einem weiteren Vorschlag dadurch realisieren, daß eins der druckabhängig reagierenden Ventile für die Druck- bzw. Zugstufe einen inneren federnden Ventilkörper bzw. einen konzentrisch dazu angeordneten äußeren federnden Ventilkörper aufweist.
Zur Optimierung des Bypass-Systems wird außerdem vorgeschlagen, daß den druckabhängig reagierenden Ventilen unterschiedliche Strömungsquerschnitte der jeweils zugehörigen Bypass-Verbindung des Bypass-Systems zugeordnet sind, wobei zweckmäßigerweise dem zweiten der in Reihe geschalteten, druckabhängig reagierenden Ventile ein größerer Strömungsquerschnitt der zugehörigen Bypass-Verbindung zugeordnet ist.
Der mit der Erfindung erzielte Vorteil besteht darin, daß insbesondere bei den zugeschalteten weicheren Dämpfungsstufen des Stoßdämpfers die Unterschiede in der Dämpfungskraft angehoben bzw. differenzierter wirksam werden, wobei die Dämpfungskraft insbesondere im Bereich kleiner Kolbengeschwindigkeiten des Stoßdämpfers angehoben wird.

Die Erfindung wird nachstehend anhand der in den beigefügten Abbildungen dargestellten Ausführungsbeispiele näher erläutert.

Hierbei zeigen:
- Figur 1: einen im Längsschnitt in zwei Hälften in zwei unterschiedlichen Wirkstellungen dargestellten Stoßdämpfer gemäß Erfindung und
- Figur 2: eine Variante der Erfindung im Teillängsschnitt.

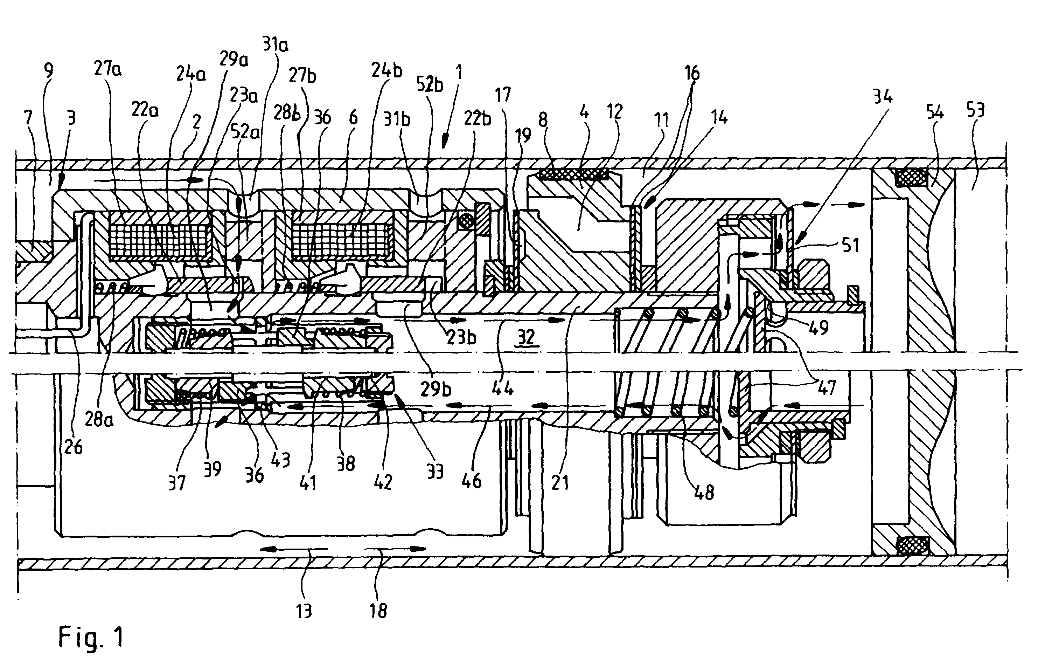

In Figur 1 ist ein Teil eines Stoßdämpfers 1 ohne Befestigungselemente dargestellt. In einem rohrförmigen Zylinder 2 befindet sich eine teilweise im Anschnitt dargestellte Kolben-/Kolbenstangenanordnung 3 mit dem eigentlichen Kolben 4, einem Übergangsteil 6 zur Aufnahme von Erregerspulen, Steuerschiebern und Bypassen, und der eigentlichen Kolbenstange 7. Der Kolben 4, der mittels einer Ringdichtung 8 gegenüber dem Zylinder 2 abgedichtet ist, trennt zwei mit einem Dämpfungsmedium, zum Beispiel Öl, gefüllte Kammern 9 und 11 voneinander. In dem Kolben 4 befindet sich ein Kanal 12 für den Hauptstrom des Dämpfungsmediums bei Zugbeanspruchung (Bewegung der Kolbenstange 7 in Richtung des Pfeils 13). Es können auch mehrere Kanäle 12 vorgesehen sein. Mit 14 ist ein als Ventil wirkender federnder Verschluß bezeichnet, der aus den Federscheiben 16 besteht. Ein entsprechender Kanal 17 (oder mehrere Kanäle) läßt den Hauptstrom bei Druckbelastung des Stoßdämpfers 1 (Bewegung der Kolbenstange 7 in Richtung des Pfeils 18) passieren. Mit 19 sind als Ventil wirkende Federscheiben vor dem Kanal 17 bezeichnet.
Auf einem als Zylinder 21 ausgebildeten gemeinsamen Sitz befinden sich ringförmig geformte Steuerschieber 22a, 22b mit jeweils vier als Bypass-Verbindungen wirkenden Bohrungen 23a bzw. 23b, die um jeweils 90 ° gegeneinander versetzt sind. Die Steuerschieber 22a, 22b werden konzentrisch umgeben von zugeordneten Erregerspulen 24a bzw. 24b, deren Zuleitungen für den Erregerstrom mit 26 bezeichnet sind. Die Erregerspulen 24 sind umgeben von Ringen 27a, 27b aus ferromagnetischem Material. Bei Erregung einer Erregerspule 24a, 24b wird der zugeordnete Steuerschieber 22a bzw. 22b aus ferromagnetischem Material entgegen der Wirkung der Federn 28a bzw. 28b in die erregte Spule hineingezogen, wo seine Bohrungen 23a, 23b aus einer Sperrposition (bei Steuerschieber 22b dargestellt) in eine Durchlaßposition (bei Steuerschieber 22a dargestellt) bewegt werden. In Durchlaßposition fluchten die

Bohrungen 23a, 23b mit Bohrungen 29a, 29b in dem Zylinder 21, so daß bei Zugbelastung (Bewegung der Kolbenstange 7 in Richtung des Pfeils 13) Dämpfungsmedium von der Kammer 9 in die Kammer 11 außer durch den Hauptstromkanal 12 auch durch den Bypass strömen kann, der in dem Beispiel realisiert ist durch radiale Bohrungen 31a in einem äußeren Zylinder des Übergangsteils 6, durch die radialen Bohrungen 23a in dem Steuerschieber 22a, durch die radialen Bohrungen 29a in dem inneren Zylinder 21 und durch eine axiale Bohrung 32 in dem Zylinder 21. Bei Erregung der Spule 24b wird ein weiterer Bypass entsprechend geöffnet.
Sowohl der ersten steuerbaren Bypass-Verbindung 23a als auch der zweiten steuerbaren Bypass-Verbindung 23b sind innerhalb der axialen Bohrung 32 jeweils in Reihe geschaltete bzw. innerhalb der Bohrung 32 in Reihe hintereinander angeordnete druckabhängig reagierende Ventile 33 bzw. 34 zugeordnet. Das der Bypass-Verbindung 23a nachgeschaltete Ventil 33 weist einen für die Zugstufe (Pfeil 13) sowie für die Druckstufe (Pfeil 18) gemeinsamen, wechselseitig federbelasteten, druckbeaufschlagbaren Ventilkörper 36 auf, der zwischen den Endanschlägen zweier durch Druckfedern 37 bzw. 38 beaufschlagbarer Federkörper 39 bzw. 41 auf einem Trägerbolzen 42 verschieblich gelagert ist.
Bei Öffnung bzw. Zuschaltung der Bypass-Verbindung 23a durch Betätigung des Steuerschiebers 22a wird durch das in die Bohrung 32 einströmende Dämpfungsmedium zunächst ein Vordruck in dem Ventil 33 aufgebaut, bis die Vorspannung des Federkörpers 41 überwunden und der Ventilkörper 36 in die rechte Anschlagposition verschoben wird. Dadurch kann das Dämpfungsmedium durch den zwischen dem Ventilkörper 36 und einem ortsfesten Ventilringsitz 43 gebildeten Ringspalt in den freien Querschnitt der Axialbohrung 32 und weiter über das noch zu beschreibende druckabhängig reagierende Ventil 34 in die Kammer 11 des Stoßdämpfers einströmen. Dieser Zustand ist durch den zur Hälfte dargestellten oberen Teil des Ventils 33 sowie durch die den Strömungsweg des Dämpfungsmediums anzeigende Pfeilkette 44 gemäß Figur 1 für die Zugstufe (Pfeil 13) des Stoßdämpfers 1 angedeutet.
In der Druckstufe (Pfeil 18) des Stoßdämpfers baut sich durch das zurückfließende Dämpfungsmedium zunächst auf der Gegenseite des Ventilkörpers 36 in der axialen Bohrung 32 ein Vordruck auf, welcher den Ventilkörper 36 gegen den Federkörper 39 bewegt und nach Überwindung der Vorspannung der Feder 37 den Ventilkörper 36 soweit nach links bewegt, daß zwischen diesem und dem ortsfesten Ventilringsitz 43 ein Durchtrittsspalt geöffnet wird. Bei dieser in der unteren Hälfte der Figur 1 dargestellten Betätigungsstellung eines Teils des Ventils 33 strömt das Dämpfungsmedium in Richtung der Pfeilkette 46 aus der Kammer 11 des Stoßdämpfers zurück in die Kammer 9.
Das der zweiten zuschaltbaren Bypass-Verbindung 23b zugeordnete druckabhängig reagierende Ventil 34 weist für die Druckstufe des Stoßdämpfers einen inneren federnden Ventilkörper 47 auf, der durch eine Druckfeder 48 gegen einen Ventilsitz 49 gedrückt wird. Für die Zugstufe des Stoßdämpfers ist das Ventil 34 mit einem konzentrisch zum inneren Ventilkörper 47 angeordneten äußeren federnden Ventilkörper 51 versehen, welcher ähnlich dem Ventilverschluß 14 des Kolbens 4 aus einer Federscheibe besteht. Bei Betätigung des Steuerschiebers 22b wird die zweite Bypass-Verbindung 23b geöffnet und damit die Dämpfungscharakteristik nochmals um eine Stufe weicher eingestellt, wobei sich durch die nunmehr vermehrt über die Bypass-Verbindung 23b in Richtung der Pfeilkette 44 fließende Gesamtmenge des Dämpfungsmediums unter dem Ventilkörper 51 des Ventils 34 ein entsprechender Vordruck aufbaut, bis der Ventilkörper 51 soweit öffnet, daß über den vergrößerten Durchtrittsquerschnitt die entsprechende Menge der Dämpfungsflüssigkeit ungehindert in die Kammer 11 fließen kann.

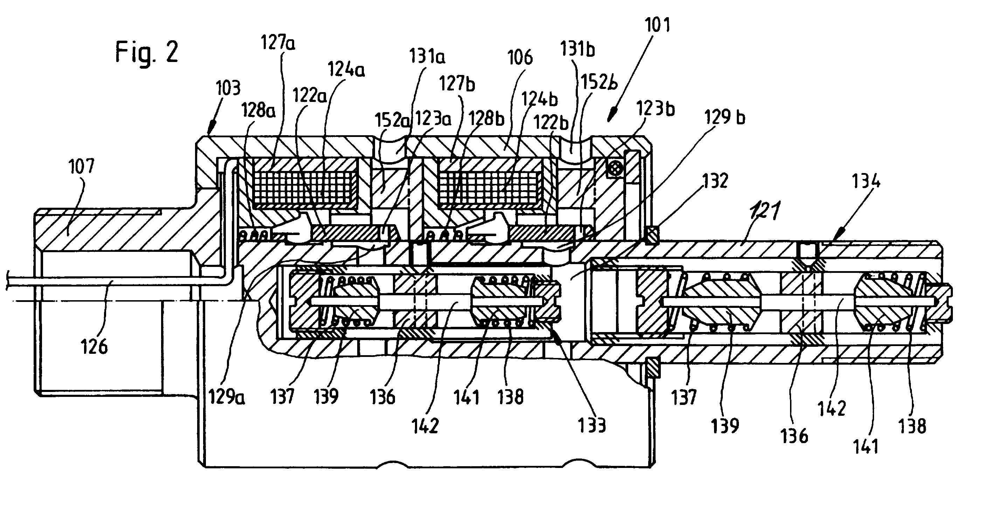

Der Rückfluß der Dämpfungsflüssigkeit entlang der Pfeilkette 46 erfolgt entsprechend in der Druckstufe (Pfeil 18) des Stoßdämpfers nach Überwindung der Vorspannung der Feder 48 durch Abheben des inneren Ventilkörpers 47 von seinem Sitz 49, was in der unteren Hälfte der Figur 1 dargestellt ist.
Durch die in den Strömungsweg 32 des Dämpfungsmediums eingefügten druckabhängig reagierenden Ventile 33 und 34 wird insbesondere bei niedrigeren Kolbengeschwindigkeiten des Stoßdämpfers die Dämpfungskraft durch die durch die Ventile 33 bzw. 34 in den entsprechenden Dämpfungsstufen erzeugten Vordrucke geringfügig angehoben.
Die Querschnitte der Bypass-Verbindungen 23a, 23b sind vorteilhaft unterschiedlich, so daß durch wahlweises Erregen einer der beiden oder beide Erregerspulen drei unterschiedliche Bypass-Ströme eingestellt werden können. Sind beide Erregerspulen entregt, so hat der Stoßdämpfer seine härteste Dämpfung, weil die Bypass-Ströme, die den Stoßdämpfer weicher machen, unterbrochen sind und das Dämpfungsmedium zwischen den Kammern 9 und 11 ausschließlich über den Kanal 12 bzw. den Kanal 17 des Kolbens 4 hin- und herströmen kann.
Die schraffierten Teile 52a, 52b sind Distanzstücke mit nicht gezeigten Ausnehmungen, durch die das Dämpfungsmedium strömen kann.
Bei Entregung der Erregerspulen 24a, 24b werden die zugehörigen Steuerschieber 22a bzw. 22b von den Federn 28a bzw. 28b in ihre Schließposition bewegt, wie anhand von Steuerschieber 22b dargestellt ist. In dieser Position fluchten die Bohrungen 23b und 29b nicht mehr miteinander, so daß der Strom durch den Bypass in dieser Position des Steuerschiebers 22b unterbrochen ist.
Auf der der Kolbenstange gegenüberliegenden Seite ist ein mit Druckgas gefüllter Raum 53 vorgesehen, der von dem Zylinder 2 und durch einen Trennkolben 54 begrenzt ist. Der Trennkolben dient dem Ausgleich unterschiedlicher Volumen der Kolbenstange 7 beim Eintritt in den Zylinder 2 und beim Austritt aus dem Zylinder 2.
Bei der in Figur 2 dargestellten Variante des Stoßdämpfers sind Elemente, die denen der Figur 1 entsprechen, mit um hundert erhöhten Bezugszahlen versehen und nicht noch einmal besonders erläutert.
Diese Variante unterscheidet sich lediglich dadurch vom zuvor beschriebenen Ausführungsbeispiel, daß den beiden steuerbaren Bypass-Verbindungen 123a und 123b gleichartige druckabhängig reagierende Ventile 133 bzw. 134 zugeordnet sind, welche in der axialen Bohrung 132 der Kolbenstange 107 in Reihe hintereinander angeordnet sind und lediglich in den Abmessungen ihrer Elemente bzw. ihrer steuerbaren Strömungsquerschnitte voneinander abweichen.

## Patentansprüche

1. Stoßdämpfer mit veränderbarer Dämpfungscharakteristik, insbesondere für Kraftfahrzeuge, mit mindestens einem mit einem Dämpfungsmedium gefüllten Zylinder (2) und einer Kolbenstange (7), die abgedichtet in den Zylinder eintaucht und die an ihrem zylinderseitigen Ende einen gegen die Zylinderwand abgedichteten Kolben (4) trägt, der den Zylinderraum in zwei Kammern (9, 11) aufteilt, die durch den Hauptstrom des Dämpfungsmediums miteinander verbunden sind, sowie mit einem aus wenigstens zwei zwischen den Kammern vorgesehenen, durch separat steuerbare Ventilkörper (22a, 22b) freigebbaren oder verschließbaren Bypass-Verbindungen (23a, 23b; 123a, 123b) bestehenden Bypass-System, dadurch gekennzeichnet, daß jede der Bypass-Verbindungen (23a, 23b; 123a; 123b) zwecks differenzierterer Variationsmöglichkeiten der Dämpfungscharakteristik mit einem in Abhängigkeit vom Strömungsdruck in der Zug- und Druckstufe des Stoßdämpfers (1) wechselseitig eine Verbindung zwischen den Kammern (9, 11) herstellenden Ventil (33; 34 bzw. 133; 134) versehen ist, wobei die Ventile (33, 34; 133, 134) zu den jeweils zugeordneten Bypass-Verbindungen (23a; 23b bzw. 123a; 123b) in Reihe geschaltet und in Verbindung mit der Kolbenstange (7; 107) sowie koaxial zu deren Achse in Reihe hintereinander angeordnet sind.

2. Stoßdämpfer nach Anspruch 1, dadurch gekennzeichnet, daß das druckabhängig reagierende Ventil (33; 133) einen für die Zug- und Druckstufe gemeinsamen, wechselseitig federbelasteten, druckbeaufschlagbaren Ventilkörper (36; 136) aufweist.

3. Stoßdämpfer nach Anspruch 1 oder 2, dadurch gekennzeichnet, daß der Ventilkörper (36; 136) zwischen den Endanschlägen zweier Federkörper (39, 41; 139, 141) auf einem Trägerbolzen (42; 142) des Ventils (33; 133) verschieblich gelagert ist.

4. Stoßdämpfer nach Anspruch 1, dadurch gekennzeichnet, daß das druckabhängig reagierende Ventil (34) für die Zug- bzw. Druckstufe einen inneren federnden Ventilkörper (47) bzw. einen konzentrisch dazu angeordneten äußeren federnden Ventilkörper (51) aufweist.

5. Stoßdämpfer nach einem der Ansprüche 1 bis 4, dadurch gekennzeichnet, daß den druckabhängig reagierenden Ventilen (33, 34) unterschiedliche Strömungsquerschnitte der jeweils zugehörigen Bypass-Verbindung (23a; 23b) des Bypass-Systems zugeordnet sind.

6. Stoßdämpfer nach Anspruch 5, dadurch gekennzeichnet, daß dem zweiten (34) der in Reihe geschalteten, druckabhängig reagierenden Ventile (33, 34) ein größerer Strömungsquerschnitt der zugehörigen Bypass-Verbindung (23b) zugeordnet ist.

## Claims

1. Shock absorber with variable damping characteristic, in particular for motor vehicles, having at least one cylinder (2) filled with a damping medium and one piston rod (7) which penetrates in sealed manner into the cylinder and carries at its end on the cylinder side a piston (4) which is sealed with respect to the cylinder wall and which divides the cylinder space into two chambers (9, 11) connected to one another by a main stream of the damping medium, and having a bypass system which comprises at least two bypass connections (23a, 23b; 123a, 123b) which are provided between the chambers and which can be released or closed by separately controllable valve bodies (22a, 22b), characterized in that, for the purpose of the possibility of more precise variation of the damping characteristic, each of the bypass connections (23a, 23b; 123a, 123b) is provided with a valve (33; 34 or 133; 134 respectively) which produces a connection between the chambers (9, 11) as a function of the flow pressure on alternating sides in the pushing and pulling stages of the shock absorber (1), the valves (33, 34; 133, 134) being arranged in series with the respectively associated controllable bypass connections (23a; 23b and 123a; 123b) and being arranged in series one behind the other in connection with the piston rod (7; 107) and coaxially with respect to the latter's axis.

2. Shock absorber according to Claim 1, characterized in that the valve (33; 133) reacting as a function of pressure has a valve body (36; 136) which is common for the pulling and pushing stages, which is spring-loaded on alternating sides and which can be acted upon by pressure.

3. Shock absorber according to Claim 1 or 2, characterized in that the valve body (36; 136) is mounted displaceably between the end abutments of two spring bodies (39, 41; 139, 141) on a support pin (42; 142) of the valve (33; 133).

4. Shock absorber according to Claim 1, characterized in that the valve (34) reacting as a function of pressure has for the pushing and pulling stages an inner sprung valve body (47) and, arranged concentrically therewith, an outer sprung valve body (51) respectively.

5. Shock absorber according to one of Claims 1 to 4, characterized in that there are associated with the valves (33, 34) reacting as a function of pressure different flow cross-sections of the respectively associated bypass connection (23a; 23b) of the bypass system.

6. Shock absorber according to Claim 5, characterized in that there is associated with the second (34) of the valves (33, 34) reacting as a function of pressure and arranged in series a larger flow cross-section of the associated bypass connection (23b).

## Revendications

1. Amortisseur à caractéristique d'amortissement variable, notamment pour véhicules automobiles, comportant au moins un cylindre (2) rempli d'un fluide d'amortissement, et une tige de piston (7) plongeant de manière étanche dans le cylindre et possédant, à son extrémité située côté cylindre, un piston (4) qui est rendu étanche par rapport à la paroi du cylindre, et qui divise l'espace du cylindre en deux chambres (9, 11) reliées l'une à l'autre par le courant principal du fluide d'amortissement, ainsi qu'un système de dérivation composé d'au moins deux liaisons de dérivation (23a, 23b;123a, 123b) prévues entre les deux chambres et susceptibles d'être ouvertes ou fermées par des corps d'obturation de soupape (22a, 22b) pouvant être commandés séparément, caractérisé en ce que chacune des liaisons de dérivation (23a,23b; 123a, 123b), dans le but de réaliser des possibilités de variations différenciées de la caractéristique d'amollissement, est pourvue d'une soupape (33, 34 ; 133, 134) établissant réciproquement une liaison entre les chambres (9, 11) en fonction de la pression de l'écoulement durant la phase de traction et la phase de compression, les soupapes (33, 34; 133, 134) étant montées en série avec les liaisons de dérivation (23a; 23b ; 123a; 123b) qui leurs sont respectivement associées, et étant disposées, en liaison avec la tige de piston (7 ; 107)et coaxialement à son axe, l'une à la suite de l'autre, en série.

2. Amortisseur selon la revendication 1, caractérisé en ce que la soupape (33; 133) réagissant en fonction de la pression comporte un corps d'obturation de soupape (36; 136) commun pour la phase de traction et la phase de compression, chargé mutuellement par ressort et susceptible d'être sollicité en pression.

3. Amortisseur selon la revendication 1 ou 2,caractérisé en ce que le corps d'obturation de soupape (36; 136) est monté coulissant sur une broche de support (42; 142) de la soupape (33; 133) entre les butées de fin de course de deux corps de ressort (39, 41; 139, 141).

4. Amortisseur selon la revendication 1, caractérisé en ce que la soupape (34) réagissant en fonction de la pression comporte pour la phase de compression et la phase de traction, respectivement un corps d'obturation de soupape intérieur (47) sollicité par ressort, et, disposé concentriquement à celui-ci, un corps d'obturation de soupape extérieur (51) sollicité par ressort.

5. Amortisseur selon l'une des revendications 1 à 4, caractérisé en ce qu'aux soupapes (33, 34) réagissant en fonction de la pression, sont associées des sections d'écoulement différentes des liaisons de dérivation (23a; 23b) respectivement correspondantes du système de dérivation.

6. Amortisseur selon la revendication 5, caractérisé en ce qu'à la seconde (34) des soupapes (33, 34) montées en série et réagissant en fonction de la pression, est associée une section d'écoulement plus grande de la liaison de dérivation (23b) correspondante.
